# EUROPEAN PATENT SPECIFICATION

(11) **EP 3 546 044 B1**
(45) Date of publication and mention of the grant of the patent: **31.08.2022**
(21) Application number: 19162312.3
(22) Date of filing: 12.03.2019
(51) Int. Cl.: B01D 19/00

(54) **SYSTEM FOR DISPENSING LIQUIDS**
SYSTEM ZUR AUSGABE VON FLÜSSIGKEITEN
SYSTÈME DE DISTRIBUTION DE LIQUIDES

(30) Priority: 27.03.2018 IT 201800003982
(43) Date of publication of application: 02.10.2019
(73) Proprietor: Flexbimec International S.r.l., 42020 Albinea (RE) (IT)
(72) Inventor: RUOZI, Maurizio, 42020 ALBINEA (RE) (IT)
(74) Representative: Corradini, Corrado

(56) References cited:
- GB-A- 645 626
- US-A- 1 879 308
- US-A- 1 887 918
- US-A- 5 174 944

## Description

### Field of the invention

The present invention relates to a system for dispensing liquids, for example oil, gas oil, gasoline or solutions containing urea (e.g. AdBlue^{®}). In particular, the dispensing systems are provided with systems for measuring the quantity of liquid dispensed.

### State of the art

As is well known, a typical system for dispensing liquids essentially comprises a pump able to draw the liquid from a tank and to send it under pressure towards a dispensing nozzle, after making it transit through a device able to measure the quantity of liquid that is transferred, for example its flow rate. For the measurement to be accurate, it is necessary for the liquid that traverses the measuring device does not containing significant quantities of gas, typically of air.

For this reason it is generally known to interpose at least one check valve between the pump and the measuring device.

So long as the check valve is impacted by the liquid, the dynamic pressure exerted by the liquid is sufficient to maintain the valve open, which shuts automatically as soon as it is reached by a mass of less dense gas, instantaneously interrupting the dispensing and consequently the measuring of the liquid.

This solution, which is efficient when the mass of gas that reaches the check valve is rather large, does not, however, prevent small gas bubbles that are sometimes mixed in the liquid to go beyond and to reach the measuring device anyway.

Documents US1887918 and US1879308 describes liquid dispensing systems according to the preamble of the independent claim 1.

### Summary of the invention

In light of these considerations, a purpose of the present invention is to provide a degassing device able to promote the separation between the liquid and any gas that may be contained therein, ensuring that only the liquid is dispensed.

An additional purpose is to achieve the aforementioned purpose within the scope of a simple, rational and relatively low-cost solution.

These and other purposes are reached by the characteristics of the invention set forth in the independent claim 1. The dependent claims outline preferred and/or particularly advantageous aspects of the invention.

The features and the aspects of the invention shall be described below making reference at times to the concepts of "higher", "lower", "elevation", "top", "bottom", "horizontal" and "vertical", which should all be understood with reference to the condition in which the degassing device is in a pre-set orientation of normal use.

In particular, the present invention includes a degassing device for liquids, comprising:
- a first chamber provided with an inlet duct and an outlet duct for the liquid,
- a discharge duct suitable to place the first chamber in communication with the external,
- a shutter body moveable between an opening position and a closing position of the discharge duct, and
- a floating body arranged in the first chamber and fixed to the shutter body to push the latter towards the position for closing the discharge duct.

Thanks to this solution, as long as the first chamber is filled with liquid, the action of the floating body maintains the shutter body in closed position, so that the liquid flows normally from the inlet duct towards the outlet duct.

If at a given instant a certain quantity of gas enters the first chamber through the inlet duct, it is separated from the liquid and it tends to accumulate in the upper part of the degassing device and does not reach the outlet duct from which only the liquid continues to exit.

If the quantity of accumulated gas exceeds a certain value, the thrust that acts on the floating body drops, causing the displacement of the shutter body towards the open position and thus allowing the gas to vent through the discharge duct.

According to one aspect of the invention, a terminal end of the inlet duct entering into the first chamber can be positioned at a higher elevation than an initial end of the outlet duct exiting from the first chamber.

In this way, the fact that the gas transported by the liquid cannot reach the outlet duct is made surer.

For this purpose, the terminal end of the inlet duct can be defined by a tube that projects in overhang into the first chamber.

In this way, the final end of the inlet duct can be brought to the most appropriate position and/or elevation into the first chamber, without complicating the structure of the degassing device.

According to another aspect of the invention, the shutter body can be shaped like a stem, for example like a vertical stem, which has a portion extending into the first chamber.

In this way, the shutter body is constructively rather simple and it can be easily fastened to the floating body.

The floating body can be shaped like a sleeve-like body having, preferably, the concavity oriented upwards.

Thanks to this solution, buoyancy is not very high, since the floating body does not contain closed cavity, but sufficient to maintain the shutter body in closed position when the first chamber if filled with liquid and not too strong to allow its opening when a significant entry of gas take place.

Being able to have the cavity oriented upwards, the floating body also has the advantage that it cannot accidentally accumulate gas pockets inside it.

According to another aspect of the invention, the degassing device can comprise a tubular body arranged vertically in the first chamber, which houses the floating body and has a closed upper end and an opposite open lower end communicating with the internal volume of the first chamber.

In this way, the tubular body serves as a protection and a guide for the floating body.

Preferably, the open lower end of the tubular body is placed at a lower elevation than the terminal end of the inlet duct leading into the first chamber. Thanks to this solution, any gas bubbles present in the incoming liquid cannot flow and accumulate inside the tubular body.

According to another aspect of the invention, the degassing device can comprise a resilient element, for example a spring, able to push the shutter body towards the position for opening the discharge duct.

Although in some embodiments the opening of the shutter body could take place solely by gravity, the presence of a resilient element has the effect of making said opening safer and faster even for limited quantities of gas into the first chamber.

According to the invention, the degassing device also comprises:
- a second chamber,
- a plunger slidably received in the second chamber to separate the internal volume of the second chamber into a first compartment and a second compartment,
- a stem fixed to the plunger and projecting outside the second chamber, and
- a connection duct suitable to place the first chamber in communication with the first compartment of the second chamber.

Thanks to this solution, the position of the plunger and of the related stem provide feedback on the pressure that prevails into the first chamber of the degassing device and, hence, on whether the first chamber contains liquid or only gas.

This feedback can advantageously be used to control other devices as will become readily apparent hereafter.

According to an aspect of the invention, the second chamber can be placed at a higher elevation than the first chamber.

In this way, any gas that enters the first chamber, being less dense than the liquid and thus tending to rise upwards, can flow spontaneously along the connection duct and reach the first compartment of the second chamber.

For the same reason, the connection duct preferably has an input end leading out of the first chamber placed at a higher elevation with respect to the input end of the outlet duct.

According to another aspect of the invention, the degassing device can comprise an additional resilient element, for example an additional spring, suitable to push the plunger in the direction to reduce the volume of the first compartment of the second chamber.

In this case, too, although in some embodiments the displacement of the plunger could occur solely by gravity, the presence of a resilient element has the effect of making the displacement safer and more rapid.

According to another aspect of the invention, the degassing device can comprise a check valve connected to the outlet duct.

In this way it is advantageously possible to prevent the liquid from returning into the device by counter-flow.

From the constructive standpoint, in an embodiment the degassing device can comprise:
- a first tubular body suitable to delimit the first chamber,
- a second tubular body suitable to delimit the second chamber,
- an intermediate body suitable to close an end of the first tubular body and an end of the second tubular body, and in which the connection duct and the discharge duct are obtained,
- a head plate suitable to close an opposite end of the second tubular body and provided with an opening into which the stem is slidably inserted, and
- a bottom plate suitable to close an opposite end of the first tubular body and to which the inlet duct and the outlet duct are associated.

In this way, the degassing device is constructively simple and compact. According to the invention the degassing device is part of a system for dispensing liquids comprising:
- a pump having an intake duct and a delivery duct,
- a tank for containing the liquid connected with the intake duct of the pump, and
- the degassing device as outlined above, whose inlet duct is connected to the delivery duct of the pump.

In this way the degassing device to ensures that the dispensed liquid is substantially free of air or nearly so.

According to an aspect of this embodiment, the dispensing system can comprise an instrument for measuring the flow rate of liquid connected with the outlet duct of the degassing device.

In this way it is possible to calculate the quantity of liquid dispensed by the system with high precision.

In another aspect of this embodiment, the discharge duct of the degassing device can be connected with the tank.

Thanks to this solution, while the accumulated gas is discharged, it is advantageously possible also to recover those small quantities of liquid that may have seeped in the second chamber together with the gas.

According to the invention, the dispensing system comprises a stop device of the pump operatively connected to the stem of the degassing device.

In this way, when the quantity of gas in the degassing device is excessive, for example because the tank is empty or nearly so, it is advantageously possible to automatically interrupt the operation of the pump.

### Brief description of the drawings

Further features and advantages of the invention will be more apparent after reading the following description provided by way of a non-limiting example, with the aid of the accompanying drawings.
Figure 1 is a schematic representation of a dispensing system according to an embodiment of the present invention.

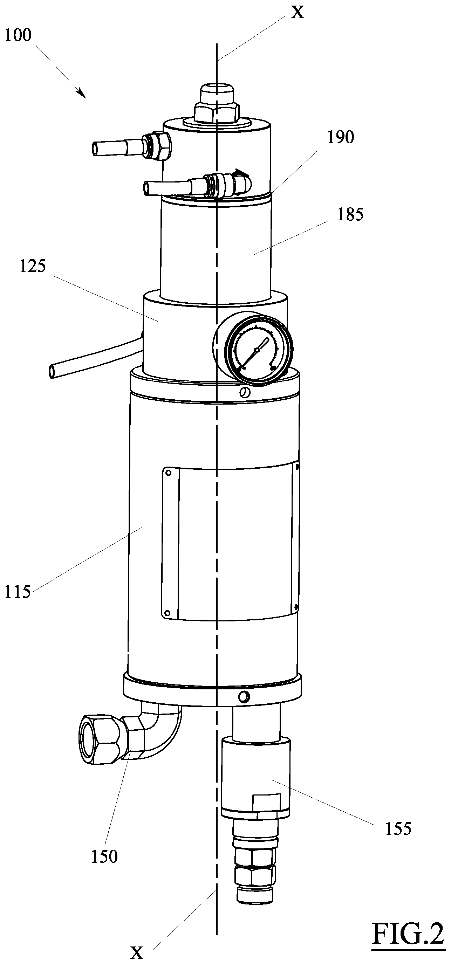

Figure 2 is an axonometric view of a degassing device included in the system of Figure 1.
Figure 3 is a longitudinal section view of the degassing device of figure 2.
Figure 4 is the section IV-IV indicated in Figure 3.
Figure 5 is an enlarged detail of figure 3.

### Detailed description

The accompanying figure shows a degassing device 100 according to an embodiment of the present invention.

The degassing device 100 has a central axis X which, when the degassing device 100 is installed in normal utilisation position, must be oriented vertically.

It should be stated that the concepts of "upper", "lower", "elevation", "top", "bottom", "horizontal" and "vertical" that will be used in the remainder of the present description, are all to be understood with reference to the aforesaid position of normal utilisation.

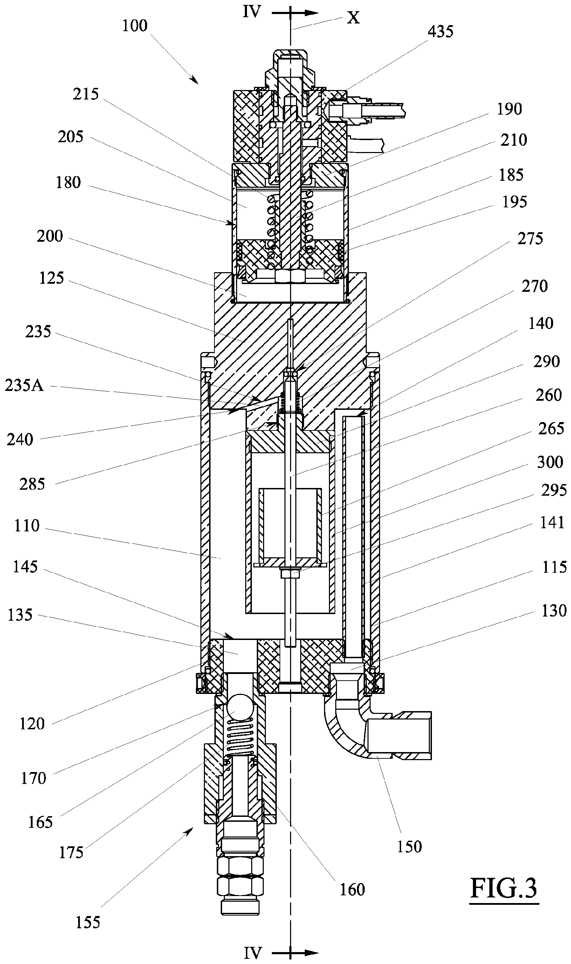

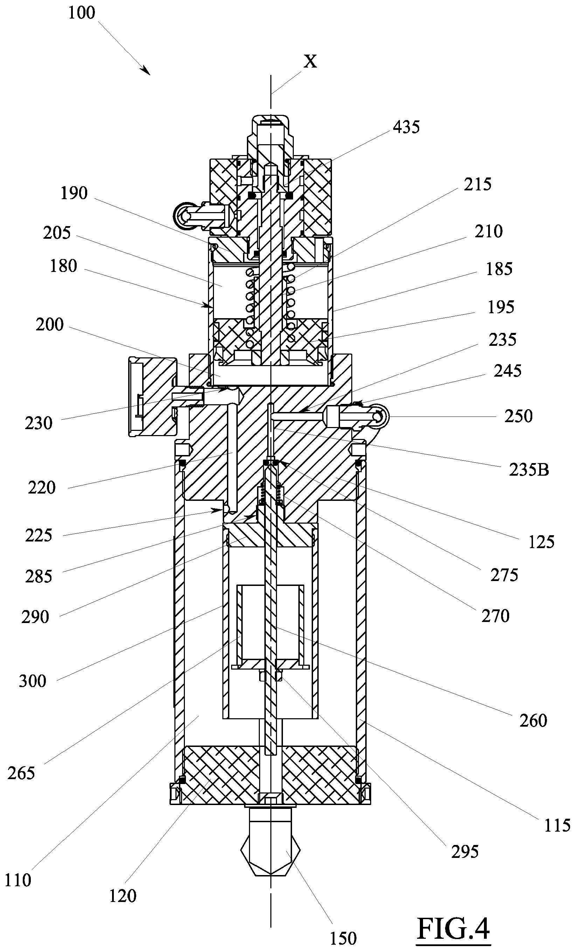

As is more readily apparent in Figures 3 and 4, the degassing device 100 comprises a first chamber 110.

The first chamber 110 can be delimited by a first tubular body 115, for example with cylindrical shape and having an axis coinciding with the central axis X, by a bottom plate 120 able to close the lower end of the first tubular body 115 and by an intermediate body 125 able to close the top end of the first tubular body 115.

Between the first tubular body 115, the bottom plate 120 and the intermediate body 125 can be interposed appropriate sealing gaskets able to make the first chamber 110 hermetically closed.

The first chamber 110 is provided with an inlet duct 130 and with an outlet duct 135 for a liquid to be treated, which can both be associated with the bottom plate 120.

In particular, the inlet duct 130 has a terminal end or section 140 through which the liquid flows into (enters) the first chamber 110, while the output duct 135 has an initial end or section 145 through which the liquid flows out of (exits) the first chamber 110.

Preferably, the terminal end 140 of the inlet duct 130 is positioned at a higher elevation with respect to the initial end 145 of the output duct 135.

In this regard, the terminal end 140 can be defined by the free end of a tube 141 that projects in overhang into the first chamber 110, for example extending vertically from the bottom plate 120.

The initial end 145 of the outlet duct 135 can instead be directly defined at the level of the bottom plate 120.

To the inlet duct 130 can be connected a fitting 150, for example an elbow fitting.

To the outlet duct 135 can be connected a check valve 155, which is able to prevent the liquid from returning in the first chamber 110.

The check valve 155 can comprise a tubular body 160 connected to the output duct 135 and a shutter body 165, shaped for example as a sphere, contained inside the tubular body 160 and movable between a closed position, in which it is in contact with a valve seat 170 to close the outlet duct 135, and an open position, in which it is distant from the valve seat 170, leaving the output duct 135 open.

A resilient element 175, for example a spring, can be contained inside the tubular body 160, for example compressed between the shutter body 165 and a sleeve fixed inside the tubular body 160, to push the shutter body 165 towards the closed position, in contrast with respect to the pressure of the liquid in the first chamber 110.

In this way, the pressure of the liquid flowing out from the first chamber 110 is able to overcome the force of the resilient element 175, displacing the shutter body 165 in the open position.

However, when the difference between the pressure downstream and downstream of the shutter body 165 drops below a pre-set minimum value, which depends on the pre-load of the resilient element 175, the shutter body 165 is automatically displaced in closed position.

The degassing device 100 can also comprise a second chamber 180, separate and preferably positioned at a higher elevation with respect to the first chamber 110.

The second chamber 180 can be defined by a second tubular body 185, for example with cylindrical shape and for example having an axis parallel or coinciding with the central axis X, whose lower end is closed by the intermediate body 125 while the upper end is closed by a head plate 190.

Between the second tubular body 185, the intermediate body 125 and the header 190 can be interposed appropriate sealing gaskets able to make the second chamber 180 hermetically closed.

Inside the second chamber 180 is housed a slidable plunger 195, which divides the second chamber 180 in two separate compartments, of which a first compartment 200 and a second compartment 205.

Preferably, the second compartment 205 is positioned above the first compartment 200 and the plunger 195 is able to slide in vertical direction.

To the plunger 195 is fixed a stem 210, preferably a vertical stem, which projects outside the second chamber 180, for example traversing the second compartment 205 and being inserted slidably in an opening obtained in the head plate 190.

The degassing device 100 can comprise a resilient element 215, for example a spring, which is able to push the plunger 195 in the direction of reducing the volume of the first compartment 200.

Said resilient element 215 can be inserted in the second compartment 205, for example coaxially to the stem 210, so as to act between the plunger 195 and the head plate 190.

In some embodiments, the resilient element 215 could be absent and the plunger 195 could be pushed in the aforesaid direction by force of gravity alone.

The degassing device 100 can comprise a connection duct 220 (see Figure 4) able to put in communication the first chamber 110 with the first compartment 200 of the second chamber 180.

The connection duct 220 can be obtained inside the intermediate body 125. The connection duct 220 comprises an initial end or section 225 that ends in the first chamber 110 and a terminal end or section 230 that ends in the first compartment 200 of the second chamber 180.

Preferably, the initial end 225 of the connection duct is positioned at a higher elevation than the initial end 145 of the outlet duct 135, for example at an elevation substantially equal to or greater than that of the terminal end 140 of the inlet duct 130.

The degassing device 100 further comprises a discharge duct 235 suitable to place the first chamber 110 in communication with the external of the degassing device 100, i.e. with the external both of the first chamber 110 and of the second chamber 180.

The discharge duct 235 can also be obtained in the intermediate body 125. The discharge duct 235 comprises an initial end or section 240 that ends in the first chamber 110 (see Figure 3) and a terminal end or section 245 that ends externally (see Figure 4).

Preferably, the initial end 240 of the discharge duct 235 is positioned at a higher elevation than the initial end 145 of the outlet duct 135, for example at an elevation substantially equal to or greater than the elevation of the terminal end 140 of the inlet duct 130.

In particular, the elevation of the initial end 240 of the discharge duct 235 can be equal to or higher than the elevation of the initial end 225 of the connection duct 220.

The terminal end 245 of the discharge duct 235 can be located on an outer lateral surface of the intermediate body 125, where it can be coupled to a fitting 250.

The degassing device 100 further comprises a shutter body 260, which is generally able to move between a closed position, in which it closes the discharge duct 235, and an open position, in which it opens the discharge duct 235.

For example, the shutter body 260 can move between these two positions sliding in parallel direction to the central axis X.

The shutter body 260 extends at least partially into the first chamber 110, where it is rigidly fixed to a floating body 265 able to push the shutter body 260 towards the closed position.

In more detail, the shutter body 260 can be shaped like a stem, for example a stem oriented parallel to the central axis X and possibly coaxially therewith. An upper end of the shutter body 260 can be inserted inside a cavity 270, which can be obtained in the intermediate body 125 so as to intercept the discharge duct 235.

In practice, the discharge duct 235 can comprise the aforementioned cavity 270 and two channels, of which a first channel 235A comprising the initial end 240 and able to put in communication the first chamber 110 with the cavity 270 (see Figure 3) and a second channel 235B comprising the terminal end 245 and able to put in communication the cavity 270 with the external (see Figure 4).

The first channel 235A can extend inclined with respect to the central axis X from a lateral surface of the cavity 270 until ending in the first chamber 110 through the initial end 240.

The second channel 235B can comprise an initial segment which, starting from the cavity 270, extends in parallel or coaxial direction with the central axis X and a final segment that is derived from the initial segment and that extends radially to the terminal end 245.

In any case, the second channel 235B can end in the cavity 270 at a valve seat 275 able to cooperate with the upper end of the shutter body 260 to close the discharge duct 235.

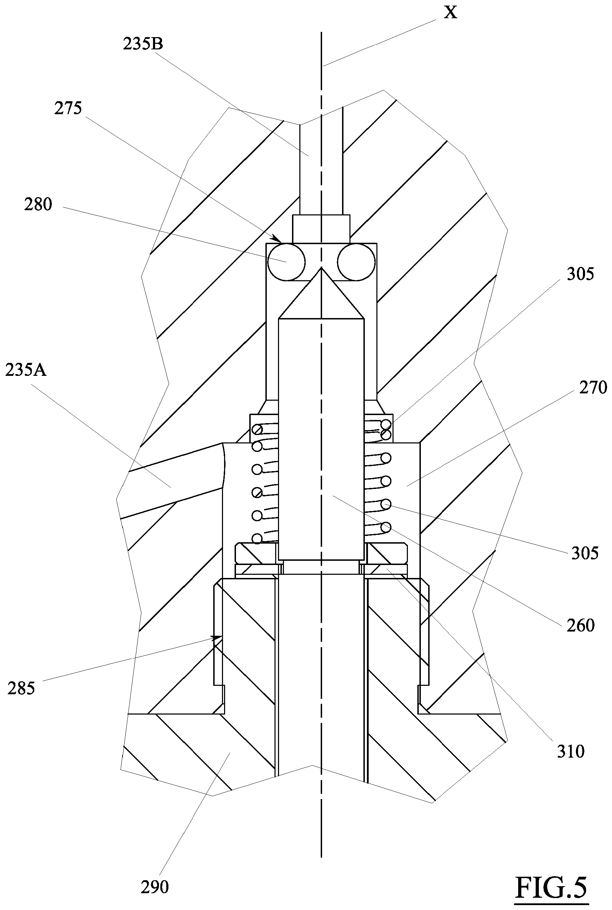

To improve this closure, the upper end of the shutter body 260 can have a tapered shape, for example conical, and may be able to act against an annular gasket 280 coaxially resting on the valve seat 275 (see Figure 5).

In addition to through the first channel 235A, the cavity 270 can be in communication with the first chamber 110 through a mouth portion 285, for example having its axis coinciding with the central axis X, which can be closed by a plug 290.

For example, the plug 290 can comprise a threaded shank that screws inside the mouth portion 285.

The plug 290 can comprise a through hole, through which a lower portion of the shutter body 260 projects into the first chamber 110 so as to be able to be fixed to the floating body 265.

The floating body 265 can have a sleeve-like shape, for example a cylindrical sleeve, which can be arranged coaxially with respect to the shutter body 260 and can be oriented in such a way as to orient its own concavity (i.e. its own open mouth portion) vertically upwards.

The floating body 265 can be screwed on a threaded segment of the shutter body 260, where it can be locked by means of a lock nut 295.

The floating body 265 can also be housed inside a tubular body 300, which in turn is contained into the first chamber 110 where it can be oriented so that its own axis is parallel to the central axis X, for example coinciding therewith. The tubular body 300 can have a closed upper end and an opposite open lower end and communicating with the internal volume of the first chamber 110.

For example, the upper end of the tubular body 300 can be closed by a portion of the plug 290, to which it can be fixed by threaded coupling.

Starting from the upper end, the tubular body 300 extends preferably until positioning its own lower end at a lower elevation than the terminal end 140 of the inlet duct 130.

As shown in Figure 5, the degassing device 100 can further comprise a resilient element 305 to push the shutter body 260 in the direction of opening the discharge duct 235.

Said resilient element 305 can be a spring, for example a helical compression spring, which can be inserted in the cavity 270, for example coaxially to the shutter body 260.

In particular, the resilient element 305 can be interposed between an abutment surface of the cavity 270 and a ring 310, for example a Seeger ring, axially fastened to the portion of the shutter body 260 that is contained inside the cavity 270.

In this way, going to abut against the plug 290, the ring 310 also serves as an end stop for the shutter body 260 in the opening direction of the discharge duct 235.

In some embodiments, the resilient element 305 could, however, be absent and the shutter body 260 could be pushed towards the open position by force of gravity alone.

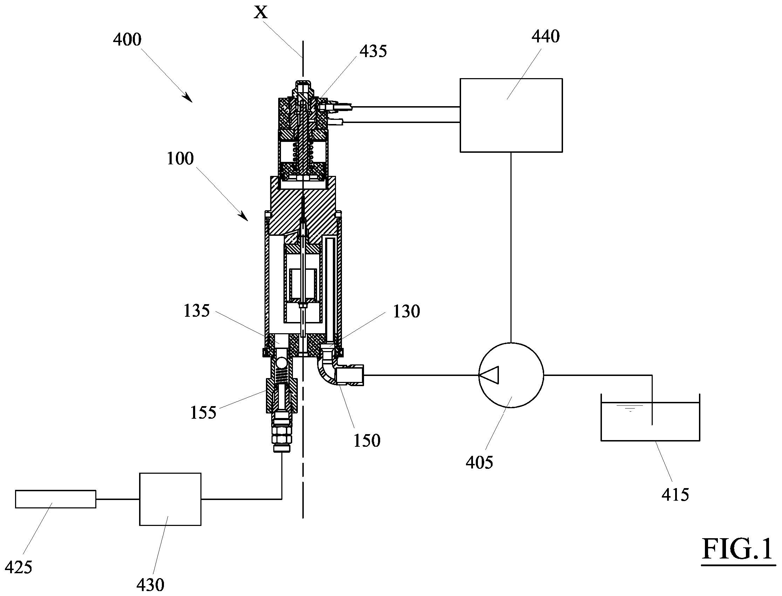

As shown in Figure 1, the degassing device 100 described above can be inserted in a system 400 for dispensing a liquid, for example oil, gas oil, gasoline or solutions containing urea (e.g. AdBlue^{®}).

In addition to the degassing device 100, this system 400 can comprise a pump 405, for example a pneumatic pump, which has an intake duct connected with a tank 415 for containing the liquid to be dispensed and a delivery duct connected with the intake duct 130 of the degassing device 100. The outlet duct 135 of the degassing device 100, preferably through the check valve 155, can be connected to a dispensing device 425, for example to a dispensing nozzle, able to allow the controlled dispensing of the liquid outside the system 400.

Between the outlet of the degassing device 100 and the dispensing device 425, preferably between the latter and the check valve 155, can be inserted a measuring device 430, which is able to measure the quantity of liquid that is dispensed.

The system 400 also comprises a stop device 435, for example mechanical, hydraulic, pneumatic or electrical, which is able to stop the pump 405 automatically.

In particular, the stop device 435 is operatively connected with the stem 210 of the degassing device 100, so as to start functioning and to stop the pump 405 when the position of the stem 210 corresponds to the attainment of a pre-set minimum admissible volume of the first compartment 200 of the second chamber 180.

For example, if the pump 405 is a pneumatic pump, it can be connected to a pneumatic circuit 440 able to supply it with compressed air necessary for its operation.

In this context, the stop device 435 can simply be a shut-off valve that is actuated by the stem 210 and that is able to selectively allow or interrupt the flow of compressed air towards the pump 405, so as to allow or respectively to interrupt its operation.

The shut-off valve can be integrated in the degassing device and be connected to the pneumatic circuit 440 through appropriate connecting ducts.

The operation of the degassing device 100 is described in more detail below. While the pump 405 is in operation, the first chamber 110 of the degassing device 100 is filled with the liquid under pressure that is pumped from the tank 415.

The pressure of this liquid acts on the floating body 265, which is pushed upwards together with the shutter body 260 that closes the discharge duct 235.

The same pressure that is present in the first chamber 110 also acts on the plunger 195 in the second chamber 180, pushing it in contrast with the resilient element 215 towards a position in which the stop device 435 allows the operation of the pump 405.

In this way, the liquid can only pass from the outlet duct 135 of the degassing device 100, opening the check valve 155, to then exit from the dispenser device 425, after traversing the measuring device 430.

If at a certain instant a certain quantity of gas enters the first chamber 110 through the inlet duct 130 together with the liquid, the gas tends to rise upwards, progressively accumulating in the first compartment 200 of the second chamber 180 and in the upper part of the first chamber 110, but it cannot flow out together with the liquid.

As progressively greater quantities of gas accumulate inside the degassing device 100, the level of the liquid into the first chamber 110 consequently decreases.

When this level drops beyond a certain level, the pushing force exerted on the floating body 265 is no longer sufficient to maintain the shutter body 260 in contact with the valve seat 275.

In this way, the discharge duct 235 is opened and at least a part of the accumulated gas is discharged outside.

Since a certain quantity of liquid can also seep together with the accumulated gas, it is preferable to recover the liquid connecting the discharge duct 235 with the tank 415.

If the first chamber 110 is reached by a large quantity of air, for example because the tank 415 has completely emptied, the inner pressure would drop drastically, causing the displacement of the plunger 195 pushed by the resilient element 215 and hence the activation of the stop device 435 that interrupts the operation of the pump 405.

Naturally, to resume operation, a rearming system is provided, able to make the pump 405 restart so as to re-pressurise the degassing device 100.

By appropriately dimensioning the degassing device 100, said device may be able to process liquid flow rates of up to 10 litres of liquid per minute.

In addition, by making the degassing device 100 of stainless steel, it is possible to use it for aggressive liquids.

## Claims

1. A system (400) for dispensing liquids, comprising:
- a pump (405) having an intake duct and a delivery duct,
- a tank (415) for containing the liquid connected with the intake duct of the pump, and
- a stop device (435) of the pump (405), and
- a degassing device (100),
wherein the degassing device comprises:
- a first chamber (110) provided with an inlet duct (130) connected with the delivery duct of the pump (405) and an outlet duct (135) for a liquid,
- a discharge duct (235) suitable to place the first chamber (110) in communication with the external,
- a shutter body (260) moveable between an opening position and a closing position of the discharge duct (235), and
- a floating body (265) arranged in the first chamber (110) and fixed to the shutter body (260) to push the latter towards the position for closing the discharge duct (235),
**characterized in that** the degassing device (100) further comprises:
- a second chamber (180),
- a plunger (195) slidably received in the second chamber (180) to separate the internal volume of the second chamber (180) into a first compartment (200) and a second compartment (205),
- a stem (210) fixed to the plunger (195) and projecting outside the second chamber (180), and
- a connection duct (220) suitable to place the first chamber (110) in communication with the first compartment (200) of the second chamber (180),
wherein the stop device of the pump is able to stop the pump automatically and wherein the stem (210) of the degassing device (100) is operatively connected with the stop device (435) of the pump (400), so that the stop device (435) starts functioning and stops the pump (405) when the position of the stem (210) corresponds to the attainment of a pre-set minimum admissible volume of the first compartment (200) of the second chamber (180).

2. A system (400) according to any one of the preceding claims, wherein the shutter body (260) is shaped like a stem having a portion extending into the first chamber (110).

3. A system (400) according to any one of the preceding claims, wherein the floating body (265) is shaped like a sleeve-like body.

4. A system (400) according to any one of the preceding claims, comprising a tubular body (300) arranged vertically in the first chamber, which receives the floating body (265) and it has a closed upper end and an opposite open lower end communicating with the internal volume of the first chamber (110).

5. A system (400) according to any one of the preceding claims, comprising a resilient element (305) suitable to push the shutter body (260) towards the position for opening the discharge duct (235).

6. A system (400) according to any one of the preceding claims, wherein the degassing device (100) comprises a resilient element (215) suitable to push the plunger (195) in the direction of reducing the volume of the first compartment (200) of the second chamber (180).

7. A system (400) according to any one of the preceding claims, wherein the degassing device (100) comprises:
- a first tubular body (115) suitable to delimit the first chamber (110),
- a second tubular body (185) suitable to delimit the second chamber (180),
- an intermediate body (125) suitable to close an end of the first tubular body (115) and an end of the second tubular body (185), and in which the connection duct (220) and the discharge duct (235) are obtained,
- a head plate (190) suitable to close an opposite end of the second tubular body (185) and provided with an opening into which the stem (210) is slidably inserted, and
- a bottom plate (120) suitable to close an opposite end of the first tubular body (115) and to which the inlet duct (130) and the outlet duct (135) are associated.

## Patentansprüche

1. System (400) zum Abgeben von Flüssigkeiten, umfassend:
- eine Pumpe (405), die eine Ansaugleitung und eine Zufuhrleitung aufweist,
- einen Behälter (415) zum Enthalten der Flüssigkeit, der mit der Ansaugleitung der Pumpe verbunden ist, und
- eine Anhaltvorrichtung (435) der Pumpe (405), und
- eine Entgasungsvorrichtung (100),
wobei die Entgasungsvorrichtung Folgendes umfasst:
- eine erste Kammer (110), die mit einer Einlassleitung (130), die mit dem Zufuhrleitung der Pumpe (405) verbunden ist, und eine Auslassleitung (135) für eine Flüssigkeit versehen ist,
- eine Auslassleitung (235), die geeignet ist, um die erste Kammer (110) in Verbindung mit der Umgebung zu bringen,
- einen Verschlusskörper (260), der zwischen einer Öffnungsstellung und einer Schließstellung der Auslassleitung (235) bewegbar ist, und
- einen Schwimmkörper (265), der in der ersten Kammer (110) angeordnet und an dem Verschlusskörper (260) befestigt ist, um letzteren in die Stellung zum Schließen der Auslassleitung (235) zu drücken,
**dadurch gekennzeichnet, dass** die Entgasungsvorrichtung (100) ferner Folgendes umfasst:
- eine zweite Kammer (180),
- einen Kolben (195), der gleitend in der zweiten Kammer (180) aufgenommen ist, um das Innenvolumen der zweiten Kammer (180) in ein erstes Fach (200) und ein zweites Fach (205) zu unterteilen,
- einen Schaft (210), der an dem Kolben (195) befestigt ist und aus der zweiten Kammer (180) hervorsteht, und
- eine Verbindungsleitung (220), die geeignet ist, um die erste Kammer (110) mit dem ersten Fach (200) der zweiten Kammer (180) in Verbindung zu platzieren,
wobei die Anhaltvorrichtung der Pumpe in der Lage ist, die Pumpe automatisch anzuhalten, und wobei der Schaft (210) der Entgasungsvorrichtung (100) funktionsfähig mit der Anhaltvorrichtung (435) der Pumpe (400) verbunden ist, sodass die Anhaltvorrichtung (435) zu funktionieren beginnt und die Pumpe (405) anhält, wenn die Position des Schafts (210) dem Erreichen eines voreingestellten minimalen zulässigen Volumens des ersten Fachs (200) der zweiten Kammer (180) entspricht.

2. System (400) nach einem der vorherigen Ansprüche, wobei der Verschlusskörper (260) wie ein Schaft geformt ist, der einen Abschnitt aufweist, der sich in die erste Kammer (110) erstreckt.

3. System (400) nach einem der vorherigen Ansprüche, wobei der Schwimmkörper (265) wie ein hülsenförmiger Körper geformt ist.

4. System (400) nach einem der vorherigen Ansprüche, umfassend einen rohrförmigen Körper (300), der vertikal in der ersten Kammer angeordnet ist, der den Schwimmkörper (265) aufnimmt und ein geschlossenes oberes Ende und ein gegenüberliegendes offenes unteres Ende, das mit dem Innenvolumen der ersten Kammer (110) in Verbindung ist, aufweist.

5. System (400) nach einem der vorherigen Ansprüche, umfassend ein elastisches Element (305), das geeignet ist, um den Verschlusskörper (260) in die Position zum Öffnen der Auslassleitung (235) zu drücken.

6. System (400) nach einem der vorherigen Ansprüche, wobei die Entgasungsvorrichtung (100) ein elastisches Element (215) umfasst, das geeignet ist, um den Kolben (195) in die Richtung eines Verringerns des Volumens des ersten Fachs (200) der zweiten Kammer (180) zu drücken.

7. System (400) nach einem der vorherigen Ansprüche, wobei die Entgasungsvorrichtung (100) Folgendes umfasst:
- einen ersten rohrförmigen Körper (115), der geeignet ist, um die erste Kammer (110) zu begrenzen,
- einen zweiten rohrförmigen Körper (185), der geeignet ist, um die zweite Kammer (180) zu begrenzen,
- einen Zwischenkörper (125), der geeignet ist, um ein Ende des ersten rohrförmigen Körpers (115) und ein Ende des zweiten rohrförmigen Körpers (185) zu verschließen, und in dem die Verbindungsleitung (220) und die Auslassleitung (235) erlangt sind,
- eine Kopfplatte (190), die geeignet ist, um ein gegenüberliegendes Ende des zweiten rohrförmigen Körpers (185) zu verschließen, und die mit einer Öffnung versehen ist, in die der Schaft (210) gleitend eingeführt wird, und
- eine Bodenplatte (120), die geeignet ist, um ein gegenüberliegendes Ende des ersten rohrförmigen Körpers (115) zu verschließen, und mit der die Einlassleitung (130) und die Auslassleitung (135) assoziiert sind.

## Revendications

1. Système (400) de distribution de liquides comprenant :
- une pompe (405) dotée d'un conduit d'entrée et d'un conduit de refoulement,
- un réservoir (415) pour contenir le liquide relié au conduit d'entrée de la pompe, et
- un dispositif d'arrêt (435) de la pompe (405), et
- un dispositif de dégazage (100),
dans lequel le dispositif de dégazage comprend :
- une première chambre (110) dotée d'un conduit d'entrée (130) relié au conduit de refoulement de la pompe (405) et d'un conduit de sortie (135) d'un liquide,
- un conduit d'évacuation (235) adapté pour mettre la première chambre (110) en communication avec l'extérieur,
- un corps de fermeture (260) mobile entre une position d'ouverture et une position de fermeture du conduit d'évacuation (235), et
- un corps flottant (265) disposé dans la première chambre (110) et fixé au corps de fermeture (260) pour pousser ce dernier vers la position de fermeture du conduit d'évacuation (235),
**caractérisé en ce que** le dispositif de dégazage (100) comprend en outre :
- une deuxième chambre (180),
- un piston (195) reçu de manière coulissante dans la deuxième chambre (180) pour séparer le volume interne de la deuxième chambre (180) dans un premier compartiment (200) et un deuxième compartiment (205),
- une tige (210) fixée au piston (195) et faisant saillie à l'extérieur de la deuxième chambre (180), et
- un conduit de raccordement (220) adapté pour mettre la première chambre (110) en communication avec le premier compartiment (200) de la deuxième chambre (180),
dans lequel le dispositif d'arrêt de la pompe est capable d'arrêter la pompe automatiquement et dans lequel la tige (210) du dispositif de dégazage (100) est reliée de manière opérationnelle au dispositif d'arrêt (435) de la pompe (400), de sorte que le dispositif d'arrêt (435) commence à fonctionner et arrête la pompe (405) lorsque la position de la tige (210) correspond à l'atteinte d'un volume admissible minimum prédéfini du premier compartiment (200) de la deuxième chambre (180).

2. Système (400) selon l'une quelconque des revendications précédentes, dans lequel le corps de fermeture (260) a la forme d'une tige dont une partie s'étend dans la première chambre (110).

3. Système (400) selon l'une quelconque des revendications précédentes, dans lequel le corps flottant (265) a la forme d'un corps en forme de manchon.

4. Système (400) selon l'une quelconque des revendications précédentes, comprenant un corps tubulaire (300) disposé verticalement dans la première chambre, qui reçoit le corps flottant (265) et il présente une extrémité supérieure fermée et une extrémité inférieure opposée ouverte communiquant avec le volume interne de la première chambre (110).

5. Système (400) selon l'une quelconque des revendications précédentes, comprenant un élément élastique (305) adapté pour pousser le corps de fermeture (260) vers la position d'ouverture du conduit d'évacuation (235).

6. Système (400) selon l'une quelconque des revendications précédentes, dans lequel le dispositif de dégazage (100) comprend un élément élastique (215) adapté pour pousser le piston (195) dans le sens de la réduction du volume du premier compartiment (200) de la deuxième chambre (180).

7. Système (400) selon l'une quelconque des revendications précédentes, dans lequel le dispositif de dégazage (100) comprend :
- un premier corps tubulaire (115) adapté pour délimiter la première chambre (110),
- un deuxième corps tubulaire (185) adapté pour délimiter la deuxième chambre (180),
- un corps intermédiaire (125) adapté pour fermer une extrémité du premier corps tubulaire (115) et une extrémité du deuxième corps tubulaire (185), et dans lequel sont obtenus le conduit de raccordement (220) et le conduit d'évacuation (235),
- une plaque de tête (190) adaptée pour fermer une extrémité opposée du deuxième corps tubulaire (185) et pourvue d'une ouverture dans laquelle la tige (210) est insérée de manière coulissante, et
- une plaque de fond (120) adaptée pour fermer une extrémité opposée du premier corps tubulaire (115) et à laquelle sont associés le conduit d'entrée (130) et le conduit de sortie (135).
